# EUROPEAN PATENT APPLICATION

(11) **EP 4 465 706 A1**
(43) Date of publication of application: **20.11.2024**
(21) Application number: 24175021.5
(22) Date of filing: 09.05.2024
(51) Int. Cl.: H04W 52/02

(54) **ON-BOARD UNIT FOR A TRAFFIC CONTROL SYSTEM**

(30) Priority: 11.05.2023 IT 202300009429
(71) Applicant: MOVYON S.p.A., 00159 Roma (IT)
(72) Inventor: ANDOLFI, Luigi, 00159 Roma (IT); BISIO, Marco, 00159 Roma (IT)
(74) Representative: Pietra, Giulia

(57) **Abstract**

It is disclosed an on-board unit for a traffic control system, comprising a radio receiver, a first filtering module, a second filtering module and a central core. The on-board unit is operable in a first mode in which the radio receiver and the first filtering module are switched on, while the second filtering module and central core are switched off. In the first mode, upon receiving a radio signal, the first filtering module determines whether the latter satisfies a first filtering criterion based on a first clock having a frequency lower than the frequency of an expected radio signal. In the affirmative, the second filtering module switches on and determines whether the radio signal received satisfies a second filtering criterion based on a second clock having a frequency high-er than the frequency of the expected radio signal. in the affirmative, the central core of the on-board unit switches on.

## Description

### Technical field

The present invention in general relates to the field of traffic control methods and systems. In particular, the present invention relates to an on-board unit for a traffic control system, a traffic control system comprising said on-board unit and a method for operating said on-board unit.

### Background art

Traffic control systems are known that make use of on-board units (also called OBU) installed on board the vehicles and capable of communicating via radio with roadside units (also called RSU). Electronic road toll systems are an example of these traffic control systems. Electronic road toll systems typically comprise a network of RSUs distributed at the entry gates, at the exit gates and if necessary at intermediate points of a toll motorway network. Each RSU has a respective radio coverage area. When a vehicle enters the radio coverage area of a RSU, the OBU on board the vehicle exchanges via radio with the RSU transit data that allow determination of the toll due.

In a traffic control system, the OBU-RSU radio communication can take place according to different standards. For example, in the case of the Telepass^{®} toll system currently implemented on the motorway network in Italy, the radio communication between OBU and RSU uses DSRC (namely Dedicated Short Range Communication) technology defined by the CEN TC/278 standard.

An OBU is typically provided with a battery that powers all its components. The battery generally cannot be recharged or replaced by the user. When the battery is flat, therefore, the user must request replacement of the OBU from the traffic control service operator. It is therefore desirable for the OBU to have the lowest possible energy consumption, so that its battery has the longest possible life.

For this purpose, an OBU is typically suitable for operating in two different modes: in a first mode (also called "sleeping mode"), only a part of the OBU components is switched on, in particular only a part that allows reception of the radio signal and recognition of DSRC frames in the received radio signal. Besides, in a second mode (herein below called "active mode"), all the components of the OBU are switched on, including those of its central core, which typically comprises a microcontroller, a memory, a decoder and a radio transceiver, the receiving performances of which are generally higher than those of the radio receiver which is active in sleeping mode. In active mode, the OBU is fully operative and capable of carrying out all its functions (for example, exchange, processing and storage of transit data for calculating the toll due in the case of electronic road toll systems).

The energy consumption of the OBU in active mode is naturally higher than its consumption in sleeping mode. It is therefore preferable for the OBU to remain in sleeping mode for most of the time and to go to active mode only when necessary, namely when it enters the radio coverage area of a RSU of the traffic control system. In the following of the present description and in the claims, entry of the OBU into the active mode will also be called "OBU wake-up".

According to a known technique, the OBU wake-up is triggered by the recognition of DSRC frames in the radio signal received by the OBU. Said recognition is generally carried out by a filtering module, which is active in sleeping mode and makes use of a local clock having a frequency much lower than the typical frequency of the DSRC signal, thus minimizing the OBU energy consumption in sleeping mode.

### Summary of the invention

The Applicant has observed that this known technique for controlling the OBU wake-up has some drawbacks.

In particular, the Applicant has observed that, in addition to the DSRC frames coming from the RSUs of the traffic control system, an OBU often also receives other radio signals in the same band. These other radio signals can, for example, come from RLANs (Radio Local Area Networks) that may be present on board the vehicle (for example, the RLAN of the vehicle infotainment system) or outside the vehicle (for example, the RLAN of the domestic WiFi router, when the vehicle is in the garage). Although they are not DSRC signals, the known filtering module could erroneously recognize these radio signals as such. This occurs because the criterion applied by the known filtering module, being based on a clock with much lower frequency than that of the DSRC signal, could be incidentally satisfied also by non-DSRC radio signals. These radio signals therefore represent a radio interference which, disadvantageously, the known filtering module is not capable of filtering and which, therefore, can trigger OBU wake-ups also when not necessary, with consequent energy waste by the OBU.

In view of the above, an object of the present invention is to provide an on-board unit for a traffic control system that solves the above-mentioned problems.

In particular, an object of the present invention is to provide an on-board unit for a traffic control system that has a minimum risk of wake-ups from radio interferences, thus minimizing energy consumption by the OBU and ensuring that its battery lasts as long as possible.

According to embodiments of the present invention, this problem is solved by an on-board unit for a traffic control system comprising a radio receiver, a first filtering module, a second filtering module and a central core; the on-board unit is operable in a first mode (below also called "sleeping mode") in which the radio receiver and the first filtering module are switched on, while the second filtering module and the central core are switched off; in the first mode, upon receiving a radio signal via the radio receiver, the first filtering module determines whether the received radio signal satisfies a first filtering criterion based on a first clock having a frequency lower than the frequency of an expected radio signal (for example, but not exclusively, a DSRC signal); in the negative, the on-board unit remains in the first mode; in the affirmative, the second filtering module switches on (second mode of the on-board unit, herein below also called "semi-sleeping mode") and determines whether the radio signal satisfies a second filtering criterion based on a second clock having a frequency higher than the frequency of the expected radio signal; in the negative, the on-board unit returns to the sleeping mode; in the affirmative, the central core of the on-board unit switches on (third mode or "active mode" of the on-board unit), so that all the components of the on-board unit are switched on and the on-board unit is fully operative and capable of carrying out all its functions.

The on-board unit according to embodiments of the present invention advantageously has a minimum risk of wake-ups due to radio interferences.

The on-board unit according to embodiments of the present invention exhibits indeed two cascaded filtering levels of the received radio signals: a first filtering performed by the first filtering module, which is always active; and a second filtering performed by the second filtering module, which is activated only in the case of a positive outcome of the first filtering.

The first filtering is coarser, since the filtering criterion is based on the first clock which is slow. The use of a slow clock is on the one hand advantageous in terms of energy consumption but, as discussed above, on the other hand can also result in radio signals other than the expected one accidentally satisfying the filtering criterion.

Advantageously, according to the present invention this first filtering is followed by a second filtering, which discriminates the received radio signals on the basis of the second clock having higher frequency than the frequency of the expected radio signal, therefore faster than the first clock used by the first filtering module. The use of the second faster clock entails an energy consumption which is higher than the first filtering, but which is much lower than the consumption of the on-board unit in the active mode (typically, approximately 6 orders of magnitude lower). However, this higher energy consumption by the second filtering has a reduced impact on the overall life of the battery, because the second filtering switches on just when necessary, namely in the case of a positive outcome of the first filtering. Moreover, the second filtering is more accurate than the first one and is therefore capable of identifying the expected radio signal reliably and rapidly. Since the wake-up of the on-board unit (namely entry into the active mode, in which also the central core is switched on, and therefore substantially all the components of the on-board unit are switched on) is triggered only upon the positive outcome of the second filtering, the risk of wake-ups from radio interferences is advantageously and significantly reduced with respect to the case in which only the first filtering is applied.

The energy consumption by the on-board unit is therefore advantageously minimized, thereby prolonging the battery life thereof.

According to a first aspect of the present invention, an on-board unit is provided for a traffic control system, comprising: a radio receiver, a first filtering module, a second filtering module and a central core, wherein the on-board unit is operable in a first mode in which the radio receiver and the first filtering module are switched on, while the second filtering module and the central core are switched off, and wherein:
- the first filtering module is configured to, in the first mode, upon receiving a radio signal via the radio receiver, determine whether the received radio signal satisfies a first filtering criterion based on a first clock having a frequency lower than the frequency of an expected radio signal;
- the second filtering module is configured to switch on if the first filtering module has determined that the received radio signal satisfies the first filtering criterion and, when switched on, to determine whether the received radio signal satisfies a second filtering criterion based on a second clock having a frequency higher than the frequency of the expected radio signal; and
- the central core is configured to switch on if the second filtering module has determined that the received radio signal satisfies the second filtering criterion.

Preferably, the first clock has a frequency lower than or equal to 1/10 of the frequency of the expected radio signal, for example it is equal to approximately 1/30 of the frequency of the expected radio signal.

Preferably, the first filtering module is configured to determine if the received radio signal satisfies the first filtering criterion by checking whether the number of edges exhibited by the received radio signal in a predetermined observation period is within a range of expected values for the expected radio signal, the observation period being determined on the basis of the first local clock.

According to an advantageous variant, the first filtering module is configured to iterate said checking whether the number of edges exhibited by the received radio signal in a predetermined observation period is within the range of expected values for a number N of consecutive observation periods, and to determine that the received radio signal satisfies the first filtering criterion if the number of edges exhibited by the received radio signal is within the range of expected values for at least N* observation periods, with N* < N.

Preferably, the second filtering module is configured to, when switched on, sample the received radio signal with a sampling period equal to the period of the second clock.

Preferably, the second clock has a frequency higher than or equal to 10 times the frequency of the expected radio signal, for example it is equal to approximately 16 times the frequency of the expected radio signal.

Preferably, the second filtering module is configured to determine whether the received radio signal satisfies the second filtering criterion by determining whether the received radio signal has a coding corresponding to the coding of the expected radio signal.

Preferably, the second filtering module is configured to check whether the received radio signal has a coding corresponding to the coding of the expected radio signal by identifying at least one symbol of the received radio signal and checking whether the at least one identified symbol has one or more properties of the symbols of the coding of the expected radio signal.

Preferably, the second filtering module is configured to check whether the at least one identified symbol has a duration substantially equal to at least one symbol duration provided by the coding of the expected radio signal.

Preferably, the second filtering module is configured to identify an ordered sequence of symbols of the received radio signal and to check whether the ordered sequence of symbols comprises at least one predefined sequence of symbols provided by the coding of the expected radio signal and/or whether the ordered sequence of symbols is devoid of further predefined sequences of symbols prohibited by the coding of the expected radio signal.

Preferably, the second filtering unit is configured to determine whether the received radio signal satisfies the second filtering criterion by determining whether the received radio signal comprises at least one predetermined field provided in the expected radio signal.

According to a second aspect, the present invention provides a method for operating an on-board unit for a traffic control system, wherein the on-board unit comprises a radio receiver, a first filtering module, a second filtering module and a central core, the method comprising:
a) operating the on-board unit in a first mode in which the radio receiver and the first filtering module are switched on, while the second filtering module and the central core are switched off;
b) upon reception of a radio signal via the radio receiver, determining via the first filtering module whether the received radio signal satisfies a first filtering criterion based on a first clock having a frequency lower than the frequency of an expected radio signal;
c) if the first filtering module determines that the received radio signal satisfies the first filtering criterion, switching on the second filtering module and, via the second filtering module, determining whether the received radio signal satisfies a second filtering criterion based on a second clock having a frequency higher than the frequency of the expected radio signal; and
d) switching on the central core if the second filtering module determines that the received radio signal satisfies the second filtering criterion.

### Brief description of the drawings

The present invention will be clearer from the following detailed description, provided by way of non-limiting example, to be read with reference to the attached drawings in which:
- Figure 1 schematically shows a traffic control system according to embodiments of the present invention;
- Figure 2 shows in greater detail the structure of an OBU comprised in the traffic control system of Figure 1, according to embodiments of the present invention;
- Figure 3 is a flow chart of the operation of the OBU of Figure 2, according to embodiments of the present invention;
- Figure 4 is a flow chart that shows in greater detail the operation of the first filtering module comprised in the OBU, according to an advantageous variant; and
- Figure 5 is a flow chart that shows in greater detail the operation of the second filtering module comprised in the OBU, according to an advantageous variant.

### Detailed description of preferred embodiments of the invention

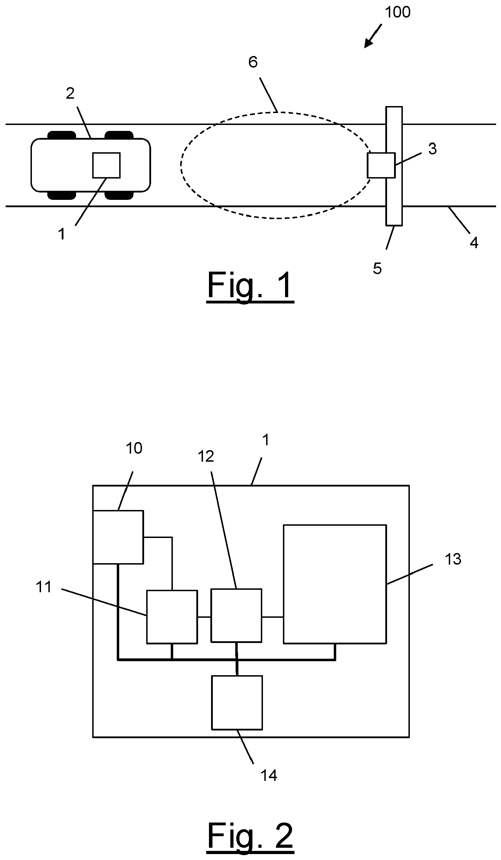

Figure 1 schematically shows a traffic control system 100 according to embodiments of the present invention. By way of example, it will be assumed that the system 100 is an electronic road toll system. This is of course not limiting, since the system 100 could be for example a system for controlling access to a restricted traffic area or to a car park, etc.

The system 100 comprises at least one on-board unit or OBU 1. The OBU 1 is preferably installed on board a vehicle 2.

The system 100 further comprises at least one roadside unit or RSU 3. The RSU 3 is preferably installed near a stretch of road 4 along which the vehicle 2 travels. The stretch of road 4 can be multi-lane or single lane. The stretch of road 4 can for example be a stretch of motorway, the use of which requires payment of a toll which is calculated by the system 100. The RSU 3 can be located for example at an entry gate, an exit gate or an intermediate point of the stretch of road 4. For example, the RSU 3 can be installed on a bridge structure 5 above the stretch of road 4.

The OBU 1 and the RSU 3 are preferably configured to communicate with each other by radio. Specifically, the RSU 3 has a radio coverage area 6 and is configured to exchange data with the OBU 1 when the vehicle 2 enters the radio coverage area 6, for example transit data that allow determination of the toll due by the driver of the vehicle 2 for use of the stretch of road 4.

The radio communication between the OBU 1 and the RSU 3 can take place according to different standards. By way of non-limiting example, the radio communication between the OBU 1 and the RSU 3 can use DSRC (namely Dedicated Short Range Communication) technology defined by the CEN TC/278 standard.

With reference to Figure 2, in order to support the radio communication, the OBU 1 preferably comprises a radio receiver 10, configured to receive radio signals according to the standard used for the radio communications with the RSU 3.

The OBU 1 furthermore preferably comprises a first filtering module 11 and a second filtering module 12. As will be described in further detail below, the first filtering module 11 is configured to perform a first coarse filtering on all the radio signals received by the radio receiver 10; the second filtering module 12 is instead configured to perform a second fine filtering on the received radio signals that have passed through the first coarse filtering.

The OBU 1 furthermore preferably comprises a central core 13, in turn comprising a microcontroller, a memory, a decoder and a radio transceiver, the reception performances of which are preferably higher than those of the radio receiver 10.

The OBU 1 furthermore preferably comprises a battery 14 electrically connected (directly or indirectly) to the other components of the OBU 1 (namely to the radio receiver 10, to the first filtering module 11, to the second filtering module 12 and to the central core 13), so as to provide electrical power to these components.

According to embodiments of the present invention, the OBU 1 is operable in different modes.

In a first mode (herein below also called "sleeping mode"), the radio receiver 10 and the first filtering module 11 are switched on, while all the other components of the OBU 1 (specifically, the second filtering module 12 and the central core 13) are switched off. The energy consumption of the OBU 1 is therefore due exclusively to the radio receiver 10 and to the first filtering module 11.

In a second mode (herein below also called "semi-sleeping mode"), also the second filtering module 12 is switched on, while the central core 13 continues to be switched off. In semi-sleeping mode, therefore, the energy consumption of the OBU 1 is mainly due to the second filtering module 12.

In a third mode (herein below also called "active mode"), also the central core 13 switches on, so that substantially all the components of the OBU 1 are switched on. Since the central core 13 is the part of the OBU 1 that generally has the highest energy consumption, in active mode the energy consumption of the OBU 1 is mainly due to the central core 13.

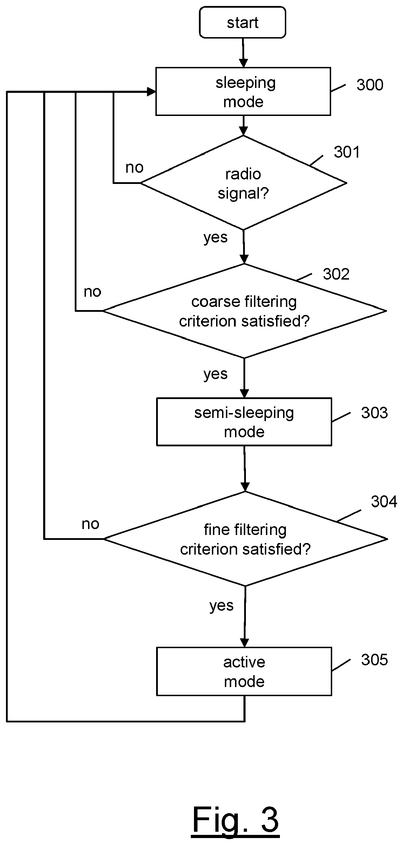

Herein below, with reference to the flow chart of Figure 3, the operation of the OBU 1 and its components will be described in further detail.

As long as the OBU 1 does not receive any radio signal via the radio receiver 10, the OBU 1 preferably remains in the sleeping mode (step 300).

Upon receiving a radio signal via the radio receiver 10 (step 301), the first filtering module 11 - switched on in sleeping mode - preferably determines whether the radio signal received satisfies a filtering criterion (also called "coarse filtering criterion" herein below) based on a first clock having a frequency lower than the frequency of an expected radio signal (step 302).

The frequency of the first clock is preferably lower than or equal to 1/10 of the frequency of the expected radio signal, for example it can be equal to approximately 1/30 of the frequency of the expected radio signal. For example, if the radio communication between the OBU 1 and the RSU 3 is by DSRC (namely Dedicated Short Range Communication) technology defined by the CEN TC/278 standard, the expected radio signal is a DSRC radio signal emitted by the RSU 3, the detection of which is indicative of the entry of the OBU 1 into the radio coverage area 6 of the RSU 3. In this case, the first clock can have, for example, a frequency of 32.768 KHz, equal to approximately 1/30 of the frequency of the DSRC radio signal. The first clock can be generated, for example, by a local oscillator comprised in the OBU 1.

Preferably, the coarse filtering criterion applied at step 302 by the first filtering module 11 can be whether the number of edges (preferably, leading edges) exhibited by the received radio signal in a certain observation period is compatible or not with the number of edges (in particular, leading edges) typically exhibited by the expected radio signal in the same observation period. The observation period can be equal, for example, to one or more periods of the first clock used by the first filtering module 11. Preferably, the number of edges counted in the observation period is compared with an expected range of values, preferably between 5 and 19. If the number of edges counted in the observation period is comprised in the expected range of values, the first filtering module 11 preferably concludes that the coarse filtering criterion applied in step 302 is satisfied.

According to an advantageous variant, the count of the edges can be repeated for a certain number N of consecutive observation periods (for example N=3 or N=5). Preferably, the first filtering module 11 considers the coarse filtering criterion satisfied if the number of edges counted in the received radio signal is within the expected range of values for at least N* observation periods, with N* < N. For example, if N is an odd number, N* can be equal to (N+1)/2.

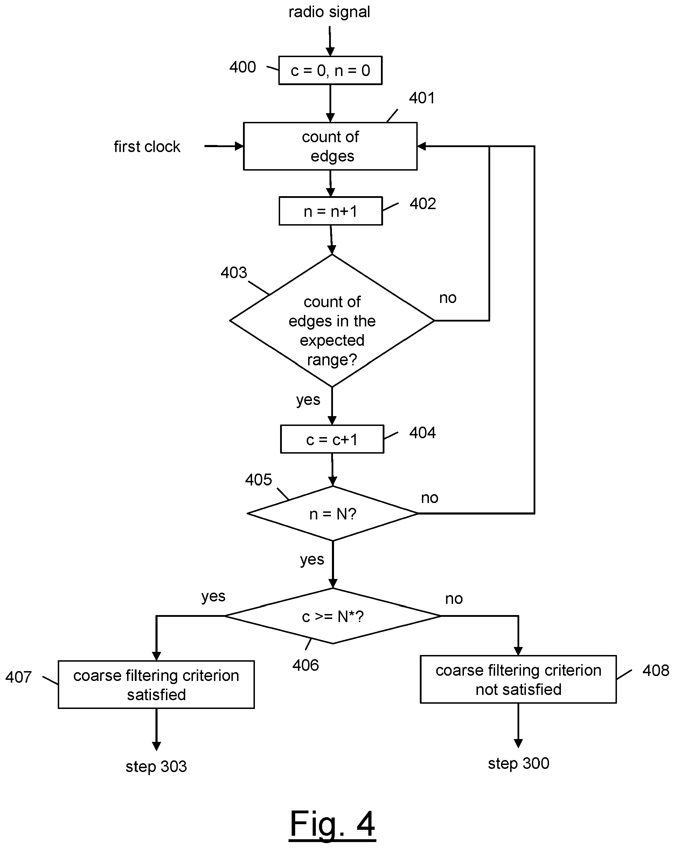

Figure 4 shows in further detail the operation of the first filtering module 11 according to this variant.

The first filtering module preferably implements two counters c and n. Upon receiving a radio signal, the two counters c and n are preferably initialized at the value 0 (step 400).

Then, on the basis of the local clock, the first filtering module 11 counts the number of edges of the received radio signal in a first observation period (step 401). Once the count has finished, the first filtering module 11 preferably increases by 1 the counter n (step 402), which therefore counts the total number of observation periods for which the number of edges has been counted.

The first filtering module 11 preferably determines whether the number of edges counted is within the expected range of values (step 403).

In the affirmative, the first filtering module 11 preferably increases by 1 also the counter c (step 404), which therefore counts the number of observation periods for which the number of edges counted is within the expected range of values.

In the negative, instead, the first filtering module 11 does not increase the counter c and preferably returns to step 401, proceeding with the counting of the edges of the received radio signal in the subsequent observation period.

The above operation is preferably repeated until the first filtering module 11 determines that the counter n has become equal to N (step 405), indicating that the edges of the received radio signal have been counted for N observation periods.

The first filtering module 11 then preferably checks whether the value reached by the counter c is greater than or equal to N* (step 406).

In the affirmative, the first filtering module 11 preferably concludes that the received radio signal satisfies the coarse filtering criterion (step 407). In the negative, the first filtering module 11 preferably concludes that the received radio signal does not satisfy the coarse filtering criterion (step 408).

Referring back to the flow chart of Figure 3, if at step 302 the first filtering module 11 determines that the received radio signal does not satisfy the coarse filtering criterion, it preferably concludes that the received radio signal is not the expected radio signal. The OBU 1 therefore remains in sleeping mode (step 300), waiting to receive further radio signals via the radio receiver 10.

If, on the other hand, at step 302 the first filtering module 11 determines that the received radio signal satisfies the coarse filtering criterion, it preferably concludes that the received radio signal could be the expected radio signal. The second filtering module 12 thus switches on, bringing the OBU 1 to the semi-sleeping mode (step 303).

Once the OBU 1 has entered the semi-sleeping mode, the second filtering module 12 determines whether the received radio signal satisfies a filtering criterion (herein below also called "fine filtering criterion") based on a second clock having a frequency higher than the frequency of the expected radio signal (step 304).

The frequency of the second clock is preferably higher than or equal to 10 times the frequency of the expected radio signal, for example it can be equal to approximately 16 times the frequency of the expected radio signal. For example, if the radio communication between the OBU 1 and the RSU 3 is by DSRC (namely Dedicated Short Range Communication) technology defined by the CEN TC/278 standard, the expected radio signal is a DSRC radio signal emitted by the RSU 3, the detection of which is indicative of entry of the OBU 1 into the radio coverage area 6 of the RSU 3. In this case, the second clock can have, for example, a frequency of 32 MHz, equal to approximately 16 times the frequency of the DSRC radio signal. The second clock can be generated for example by a local oscillator comprised in the OBU 1.

According to an embodiment, the fine filtering criterion applied by the second filtering module 12 at step 304 can comprise checking that the received radio signal has a coding corresponding to the coding of the expected radio signal. For example, if the radio communication between the OBU 1 and the RSU 3 is by DSRC (namely Dedicated Short Range Communication) technology defined by the CEN TC/278 standard, the expected radio signal is a DSRC radio signal, which typically has FM0 coding. As known, the FM0 coding is a two-phase coding in which the bit "1" has transitions only at the beginning and at the end of the bit period, while the bit "0" also has an additional transition halfway through the bit period. At step 304, therefore, the second filtering module 12 preferably checks whether the received radio signal has a FM0 coding.

Preferably, in order to determine whether the received radio signal has a coding corresponding to the coding of the expected radio signal, the second filtering module 12 considers a time window of the received radio signal long enough to minimize the risk of emulation, namely the risk that the received radio signal - although it is not the expected radio signal - in a short time interval accidentally has features similar to those of the coding of the expected radio signal. For example, if the expected radio signal is a DSRC signal, the time window is preferably between 30 µs and 150 µs, more preferably between 50 µs and 120 µs, for example 80 µs.

Preferably, within the above-mentioned time window, the second filtering module 12 identifies the symbols comprised in the received radio signal, where the term "symbol" indicates the portion of received radio signal comprised between two consecutive transitions. The second filtering module 12 then preferably determines whether the symbols identified have one or more properties of the symbols of the coding of the expected radio signal. In particular, according to an embodiment, the second filtering module 12 determines whether the symbols identified exhibit a duration substantially equal to that of the symbols of the coding of the expected radio signal.

For example, in the case of FM0 coding, the radio signal exhibits symbols of two different types, one having twice the duration of the other, namely: "short" symbols corresponding to half of a bit "0" (which, as mentioned above, exhibits a transition halfway through the bit period) and "long" symbols corresponding to a bit "1" (which, as mentioned above, exhibits transitions only at the beginning and at the end of the bit period). In this case, the second filtering module 12 can determine whether the radio signal has a FM0 coding, by determining whether the symbols identified in the received radio signal have a duration substantially equal to the duration of the short symbols of the FM0 coding or to the duration of the long symbols of the FM0 coding.

According to a first variant, the second filtering module 12 can conclude that the received radio signal has a coding corresponding to that of the expected radio signal if at least a certain number K of consecutive symbols have a duration substantially equal to that of the symbols of the coding of the expected radio signal. The number K depends on the duration of the time window. For example, if the expected radio signal is a DSRC signal and the time window is 80 µs, K can be equal to 24. According to another variant, the second filtering module 12 can conclude that the received radio signal has a coding corresponding to that of the expected radio signal if substantially all its symbols have a duration substantially equal to that of the symbols of the coding of the expected radio signal. This second criterion, more stringent than the first, preferably provides for a certain tolerance. For example, the second filtering module 12 can conclude that the received radio signal has a coding corresponding to that of the expected radio signal also when symbols of different duration are present, provided that the latter do not exceed a certain maximum number (for example 3) and/or provided that they are not consecutive.

The presence of symbols, within the time window, having duration substantially equal to that of the symbols of the coding of the expected radio signal can be considered a necessary and sufficient condition for establishing that the received radio signal has a coding corresponding to that of the expected radio signal.

In order to increase the accuracy of the fine filtering applied by the second filtering module 12, one or more additional criteria can however be applied, based on other properties of the coding of the expected radio signal. For example, the second filtering module 12 can determine whether the sequence of symbols identified in the received radio signal within the considered time window comprises at least a sequence of symbols provided by the coding of the expected radio signal and/or whether it is devoid of sequences of symbols prohibited by the coding of the expected radio signal.

For example, the HDLC (High-Level Data Link Control) protocol used by the DSRC technology at data link level provides that the DSRC signal cannot comprise more than 5 long symbols (namely bit "1") that are consecutive (except for the flag field, as will be described in further detail below). Every 5 consecutive long symbols, at data link level, in the radio signal a bit "0" is therefore inserted, which introduces two short symbols into the sequence of symbols. The second filtering module 12 can therefore check, within the considered time window, whether the received radio signal does not comprise sequences of more than 6 consecutive long symbols, and, in the affirmative, conclude that the received radio signal has a FM0 coding.

According to an advantageous variant, at step 304, the second filtering module 12 can also check whether the received radio signal comprises one or more fields typically present in the frames of the expected radio signal. This check on the one or more fields preferably follows the check on the coding, and can be performed independently of the outcome of the check on the coding, or only in the case of a positive outcome of the check on the coding.

For example, if the radio communication between the OBU 1 and the RSU 3 is by DSRC (namely Dedicated Short Range Communication) technology defined by the CEN TC/278 standard, the expected radio signal is a DSRC radio signal which, as known, is structured in frames. Each frame of the DSRC radio signal has a predefined format, which begins and ends with a field called "flag". The flag field comprises the ordered sequence of one bit "0", six bits "1" and one bit "0" (namely "01111110"). The flag field coded with FM0 coding (in which each bit "0" is coded as the sequence of two short symbols "CC" and each bit "1" is coded as a long symbol "L") therefore comprises the following ordered sequence of symbols: "CCCLLLLLLCCC". At the end and at the beginning of the sequence of symbols, an additional short symbol "C" is typically present, to introduce an initial transition and a final transition that indicate the presence of the FM0 coding. According to an advantageous variant of the present invention, the second filtering module 12 preferably searches for the above-mentioned ordered sequence of symbols in the received radio signal within the considered time window.

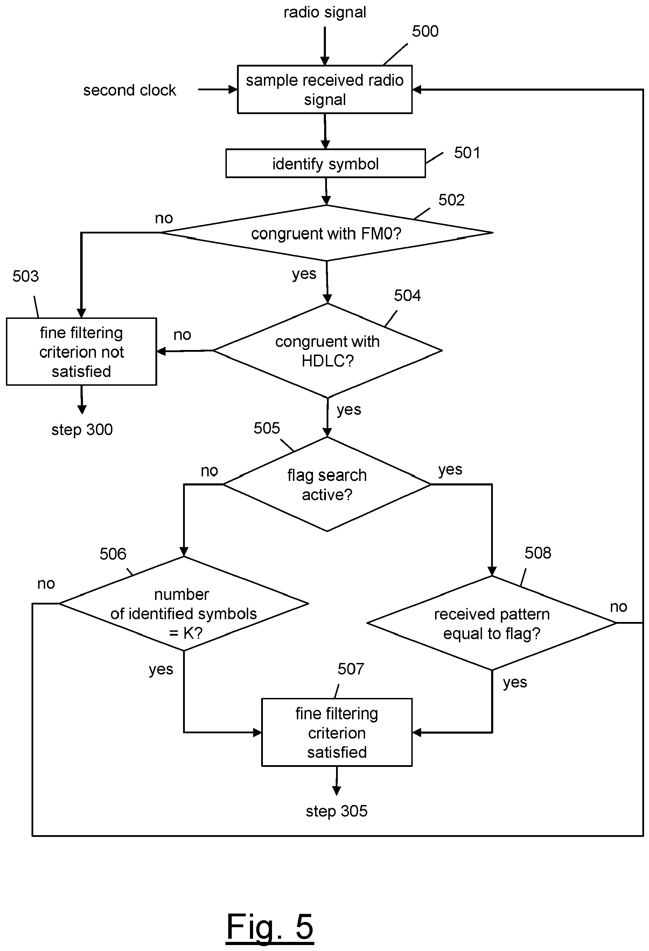

The flow chart of Figure 5 shows in further detail the operation of the second filtering module 12 according to this advantageous variant, in the illustrative case of DSRC technology using HDLC protocol and FM0 coding.

Upon receiving a radio signal, the second filtering module 12 firstly performs a sampling of the received radio signal in a predefined time window, on the basis of the second clock having a frequency higher (for example 16 times) than that of the expected radio signal (step 500). According to a preferred embodiment, the sampling period is equal to the period of the second clock.

The second filtering module 12 then preferably identifies a symbol comprised in the received radio signal and sampled within the above-mentioned time window, by searching in the received radio signal for two consecutive transitions (step 501).

The second filtering module 12 then preferably checks whether the symbol identified in the received radio signal is congruent with the FM0 coding, for example on the basis of its duration as described above (step 502).

In the negative, the second filtering module 12 preferably concludes that the fine filtering criterion is not satisfied (step 503). In the affirmative, instead, the second filtering module 12 preferably determines whether the sequence of symbols formed by the symbol identified at step 501 and any symbols identified at the preceding iterations of step 501 in the received radio signal complies with the provisions of the HDLC protocol, for example it does not comprise any sequence of more than 6 long symbols (step 504).

In the negative, the second filtering module 12 preferably concludes that the fine filtering criterion is not satisfied (step 503). In the affirmative, the second filtering module 12 preferably determines whether the search for the flag field is active or not (step 505).

In the negative, the second filtering module 12 preferably checks whether the number of symbols that have been identified in the received radio signal at the preceding iterations of step 501, and which satisfy the criterion of congruence with the FM0 coding, are equal to the above-mentioned number K (step 506). In the affirmative, the second filtering module 12 preferably concludes that the fine filtering criterion is satisfied (step 507). In the negative, the second filtering module 12 preferably returns to step 500, thus performing a new sampling of the received radio signal in a new time window.

If, on the other hand, at step 505 the second filtering module 12 determines that the search for the flag field is active, it preferably determines whether the sequence of symbols identified in the received radio signal at the preceding iterations of step 501 comprise the ordered sequence of symbols corresponding to the flag field subjected to FM0 coding (step 508). In the affirmative, the second filtering module 12 preferably concludes that the fine filtering criterion is satisfied (step 507). In the negative, the second filtering module 12 preferably returns to step 500, thus performing a new sampling of the received radio signal in a new time window.

Referring back to the flow chart of Figure 3, if at step 304 the second filtering module 12 determines that the radio signal received at step 301 does not satisfy the fine filtering criterion, the OBU 1 preferably returns to the sleeping mode (step 300).

If, on the other hand, at step 304 the second filtering module 12 determines that the radio signal received at step 301 satisfies the fine filtering criterion, the central core 13 of the OBU 1 switches on, so that the OBU 1 enters the active mode (step 305). In active mode, all the OBU 1 components are switched on, so that the OBU 1 is fully operative and capable of performing all its functions.

The OBU 1 will then return from the active mode to the sleeping mode once it has completed its functions (for example, in the case of electronic road toll payment, exchange of transit data with the RSU 3 and processing and storage thereof for calculation of the toll due).

The OBU 1 advantageously has a minimum risk of wake-ups due to radio interferences.

The OBU 1 exhibits indeed two cascaded filtering levels of the received radio signal: a first filtering 302 performed by the first filtering module 11, which is always active; and a second filtering 304 performed by the second filtering module 12, which is activated only in the case of positive outcome of the first filtering 302.

The first filtering 302 is coarser, since the filtering criterion is based on the first clock which is slow. The use of the first slow clock on the one hand is advantageous in terms of energy consumption but, as discussed above, on the other hand can mean that radio signals different from the expected one satisfy the filtering criterion.

However, advantageously, this first filtering 302 is followed by the second filtering 304, which discriminates the received radio signals on the basis of the second clock having frequency higher than that of the expected radio signal, therefore much faster than the first clock used by the first filtering module 11. The use of the second faster clock entails a higher energy consumption than the first filtering 302. However, this has a reduced impact on the overall life of the battery 14, because the second filtering 304 switches on only when necessary, namely in the case of a positive outcome of the first filtering 302. On the other hand, the second filtering 304 is more accurate than the first one and is therefore capable of reliably identifying the expected radio signal. Since wake-up of the OBU 1 (namely entry into the active mode, in which also the central core 13 is switched on, and therefore substantially all the OBU 1 components are switched on) is triggered only upon the positive outcome of the second filtering 304, the risk of wake-ups due to radio interferences is advantageously reduced with respect to the case in which only the first filtering 302 is applied.

Energy consumption by the OBU 1 is therefore advantageously minimized, thus prolonging the life of its battery 14.

## Claims

1. On-board unit (1) for a traffic control system (100) comprising: a radio receiver (10), a first filtering module (11), a second filtering module (12) and a central core (13),
wherein the on-board unit (1) is operable in a first mode in which the radio receiver (10) and the first filtering module (11) are switched on, while the second filtering module (12) and the central core (13) are switched off, and wherein:
- the first filtering module (11) is configured to, in the first mode, upon receiving a radio signal via the radio receiver (10), determine whether the received radio signal satisfies a first filtering criterion based on a first clock having a frequency lower than the frequency of an expected radio signal;
- the second filtering module (12) is configured to switch on if the first filtering module (11) has determined that the received radio signal satisfies the first filtering criterion and, when switched on, to determine if the received radio signal satisfies a second filtering criterion based on a second clock having a frequency higher than the frequency of the expected radio signal; and
- the central core (13) is configured to switch on if the second filtering module (12) has determined that the received radio signal satisfies the second filtering criterion.

2. On-board unit (1) according to claim 1, wherein the first clock has a frequency lower than or equal to 1/10 of the frequency of the expected radio signal.

3. On-board unit (1) according to claim 2, wherein the first clock has a frequency equal to approximately 1/30 of the frequency of the expected radio signal.

4. On-board unit (1) according to any of the preceding claims, wherein the first filtering module (11) is configured to determine if the received radio signal satisfies the first filtering criterion by checking whether the number of edges exhibited by the received radio signal in a predetermined observation period is within a range of expected values for the expected radio signal, the observation period being determined on the basis of the first clock.

5. On-board unit (1) according to claim 4, wherein the first filtering module (11) is configured to iterate said checking whether the number of edges exhibited by the received radio signal in a predetermined observation period is within the range of expected values for a number N of consecutive observation periods, and to determine that the received radio signal satisfies the first filtering criterion if the number of edges exhibited by the received radio signal is within the range of expected values for at least N* observation periods, with N* < N.

6. On-board unit (1) according to any of the preceding claims, wherein the second filtering module (12) is configured to, when switched on, sample said received radio signal with a sampling period equal to the period of the second clock.

7. On-board unit (1) according to any of the preceding claims, wherein the second clock has a frequency higher than or equal to 10 times the frequency of the expected radio signal.

8. On-board unit (1) according to claim 7, wherein the second clock has a frequency equal to approximately 16 times the frequency of the expected radio signal.

9. On-board unit (1) according to any of the preceding claims, wherein the second filtering module (12) is configured to determine whether the received radio signal satisfies the second filter criterion by determining whether the received radio signal has a coding corresponding to the coding of the expected radio signal.

10. On-board unit (1) according to claim 9, wherein the second filtering module (12) is configured to check whether the received radio signal has a coding corresponding to the coding of the expected radio signal by identifying at least one symbol of the received radio signal and checking whether the identified at least one symbol has one or more symbol properties of the coding of the expected radio signal.

11. On-board unit (1) according to claim 10, wherein the second filtering module (12) is configured to check whether the identified at least one symbol has a duration substantially equal to at least one symbol duration provided by the coding of the expected radio signal.

12. On-board unit (1) according to claim 10 or 11, wherein the second filtering module (12) is configured to identify an ordered sequence of symbols of the received radio signal and to verify whether the ordered sequence of symbols comprises at least one predefined sequence of symbols provided by the coding of the expected radio signal and/or if the ordered sequence of symbols is devoid of further predefined sequences of symbols prohibited by the coding of the expected radio signal.

13. On-board unit (1) according to any of the preceding claims, wherein the second filtering module (12) is configured to determine whether the received radio signal satisfies the second filter criterion by determining whether the received radio signal comprises at least one predetermined field provided in the expected radio signal.

14. A method for operating an on-board unit (1) for a traffic control system (100), wherein the on-board unit (1) comprises a radio receiver (10), a first filtering module (11), a second filtering module (12) and a central core (13), the method comprising:
a) operating the on-board unit (1) in a first mode in which the radio receiver (10) and the first filtering module (11) are switched on, while the second filtering module (12) and the central core (13) are switched off;
b) upon reception of a radio signal via the radio receiver (10), by the first filtering module (11) determining whether the received radio signal satisfies a first filtering criterion based on a first clock having a frequency lower than the frequency of an expected radio signal;
c) if the first filtering module (11) determines that the received radio signal satisfies the first filtering criterion, switching on the second filtering module (12) and, by the second filtering module (12), determining whether the received radio signal satisfies a second filtering criterion based on a second clock having a frequency higher than the frequency of the expected radio signal; and
d) switching on the central core (13) if the second filtering module (12) determines that the received radio signal satisfies the second filtering criterion.
